# EUROPÄISCHE PATENTSCHRIFT

(11) **EP 2 917 672 B1**
(45) Veröffentlichungstag und Bekanntmachung des Hinweises auf die Patenterteilung: **06.12.2017**
(21) Anmeldenummer: 13782931.3
(22) Anmeldetag: 03.10.2013
(51) Int. Cl.: F28D 17/02, F28F 21/04

(54) **WABENKÖRPER AUS KERAMIKMATERIAL**
HONEYCOMB BODY MADE OF CERAMIC MATERIAL
CORPS ALVÉOLAIRE EN MATÉRIAU CÉRAMIQUE

(30) Priorität: 08.11.2012 AT 11932012
(43) Veröffentlichungstag der Anmeldung: 16.09.2015
(73) Patentinhaber: Ibiden Porzellanfabrik Frauenthal GmbH, 8523 Frauental an der Lassnitz (AT)
(72) Erfinder: HAGG, Christoph, A-8053 Graz (AT); FAIL, Matthias, A-8530 Deutschlandsberg (AT); KRONABETHER, Franz, A-8530 Deutschlandsberg (AT)
(74) Vertreter: Fox, Tobias
(86) Internationale Anmeldenummer: PCT/AT2013/000160
(87) Internationale Veröffentlichungsnummer: WO 2014/071424

(56) Entgegenhaltungen:
- EP-A2- 0 315 047
- WO-A1-97/27385
- AT-U1- 6 726
- CN-Y- 201 152 709
- JP-A- 2007 198 706
- US-A- 3 887 741
- US-A- 5 108 685
- US-B1- 6 227 699

## Beschreibung

Die Erfindung betrifft einen Wabenkörper aus Keramikmaterial zur Verwendung in Anlagen für die Reinigung und/oder Regenerierung von Gasen, mit einem prismatischen Körper, der von einer Vielzahl zueinander paralleler, geradliniger Gasströmungskanälen durchzogen ist, die in beiden Stirnseiten des Wabenkörpers ausmünden, wobei der Wabenkörper zumindest eine Ausnehmung aufweist, die quer zur Richtung der Strömungskanäle orientiert ist.

Die Anwendung von keramischen Wabenkörperstrukturen in thermischen Regeneratoren von Abluftreinigungsanlagen und für die Prozessluftregeneration ist weit verbreitet. So sind verschiedene keramische Wabenkörper bekannt, beispielsweise aus der EP 0 472 605 B1, die als Wärmespeichermassen in Regeneratoren in Anlagen zur Abgasbehandlung eingesetzt werden. Diese Wabenkörper werden üblicherweise in Stapeln angeordnet, wobei mindestens zwei in Richtung des jeweiligen Gasstromes, gegebenenfalls im Abstand voneinander angeordnete Wabenkörper mit ihren Kanälen fluchten.

Bei den bekannten Wärmespeichermassen handelt es sich um keramische Wabenkörper, die im Wesentlichen prismenförmig ausgebildet sind, parallel zur Prismenhauptachse Kanäle mit untereinander im Wesentlichen gleichen Kanalquerschnitten aufweisen, eine spezifische Oberfläche zwischen 200 und 3000 m²/m³ haben sowie einen hydraulischen Durchmesser zwischen 1 und 12 mm.

Infolge der fluchtenden Anordnung der prismenförmigen Wabenkörper, insbesondere von deren Kanälen, setzt sich das Durchströmungsprofil des Querschnittes der Wärmespeicherkammer über alle Lagen des Stapels hinweg fort. Zonen, die in einer der Einströmungsseite des Gases zugewandten Lage schlecht oder gar nicht durchströmt sind, werden aufgrund der fluchtenden Anordnung der Kanäle im weiteren Verlauf gleichartig zur vorhergehenden Lage durchströmt. Gleiches gilt für stark durchströmte Zonen bzw. Kanäle. Der Fortsetzung des Strömungsprofils durch die Wabenkörperlagen liegt also im Wesentlichen die fluchtende Anordnung der Kanäle bzw. Prismen und eine nahezu durchgehend laminare Strömung zugrunde.

Um eine möglichst hohe thermische Effizienz bei gleichzeitig niederem Druckverlust zu erzielen, werden Regeneratorbetten oft mit sehr großen Bettquerschnitten ausgelegt. Die angestrebten theoretisch hohen thermischen Rückgewinnungsgrade können jedoch nur bei einem möglichst hohen Ausnutzungsgrad der zur Verfügung gestellten Wärmespeichermasse erzielt werden. Ein hoher Ausnutzungsgrad ist u.a. gleichzusetzen mit einer möglichst gleichmäßigen Anströmung bzw. einer homogenen Strömungsverteilung über den Bettquerschnitt. Große Bettquerschnitte, ungünstige Ventil- bzw. Klappenpositionen und zu niedrige Druckverluste über das Regeneratorbett erschweren dieses Vorhaben. Häufig sind Bettquerschnitte vorgegeben, da es sich um bestehende Anlagen mit Wärmespeichermaterialien niedriger Effizienz und hohem Druckverlust (z.B. Schüttgut-Füllkörper) handelt. Deshalb wird ein Ersatz mit höher effizienten Wabenkörpern mit niedrigem Druckverlust angestrebt. Die theoretischen thermischen Rückgewinnungswerte werden in der Praxis dann oft nicht erreicht, weil aufgrund des niedrigen Druckverlustes und/oder der ungünstigen Anströmverhältnisse keine homogene Durchströmung des Regeneratorbettes erreicht werden kann und sich Zonen mit hoher Durchströmung und solche mit geringerer bzw. keiner Durchströmung im Regeneratorbett ausbilden. Die Zonen mit geringer Durchströmung tragen kaum zur Wärmerückgewinnung bei, und der theoretische Gesamtwirkungsgrad wird entsprechend der schlechten Strömungsverteilung nicht erreicht.

Durch die in keramischen Wabenkörpern vorliegende, nicht kommunizierende Kanalstruktur können sich Luftströme innerhalb eines Wabenkörpers nicht vermischen bzw. verteilen. Auch die Stapelung der keramischen Wabenkörper mit ebenen Standflächen erlaubt keine Querverströmung zwischen den Lagen.

Durch den Einsatz von Wabenkörpern mit strukturierten Endflächengeometrien (z.B. gemäß der AT 412 817 B) konnten signifikante Verbesserungen der Querverströmung innerhalb eines Regeneratorbettes erzielt werden, jedoch sind für die gewünschten Effekte mehrere Lagen an strukturierten Wabenkörpern erforderlich und Zonen im Eintritts- und mittleren Bereich des Regeneratorbettes zeigen Strömungsdefizite.

Die JP 2007 198706 A und die EP 0 315 047 A2 zeigen jeweils Wabenkörper für einen Wärmetauscher oder für einen Katalysator, bei welchem ein Fluid durch eine Vielzahl von parallel verlaufender Kanäle leitbar ist. Manche Kanäle sind durch eine gemeinsame Querbohrung miteinander verbunden, so daß eine Querströmung stattfinden kann.

Mit der WO 97/27385 A1 wird ein Wabenkörper veröffentlicht, dessen Kanäle teilweise durch gemeinsame Querbohrungen miteinander verbunden sind. Die Querbohrungen sind von einem größeren Durchmesser als die Fluidkanäle selbst, so daß jeweils eine Gruppe von Kanälen aus einer Ebene des Wabenkörpers mit weiteren Kanälen durch eine Querbohrung miteinander verbunden wird.

Die US 3 887 741 A und die US 6 227 699 B1 lehren jeweils einen zylinderförmigen Wabenkörper, der an seinem Umfang verschiedene Einschnitte aufweist, um eine Querströmung des den Wabenkörper durchfließenden Fluids zu ermöglichen.

Das Ziel der Erfindung besteht darin, eine Wabenkörperstruktur zu entwickeln, die es ermöglicht, dass sich der Luftstrom trotz schlechter Verteilung vor dem Eintritt in das Regeneratorbett bereits kurz nach dem Eintritt möglichst über den gesamten Bettquerschnitt verteilt. Unter Eintrittsbereich eines Regeneratorbettes soll sowohl die Kaltzone eintrittseitig als auch die Heißzone austrittsseitig bei einer Mehrkammerkonstruktion verstanden werden.

Derzeit werden in Regeneratorbetten mit ungünstigen Anströmungsverhältnissen folgende Maßnahmen gesetzt, um eine möglichst frühe (mit Bezug auf den zurückgelegten Weg der Strömung innerhalb des Bettes) Querverströmung zu erzielen:
A) Lagen mit keramischen Sattelkörpern (Schüttgut)
B) Lagen mit diagonalen Kanalstrukturen (Sulzerplatten)
C) Perforierte Bleche unterhalb des Regeneratorbettes

Ad A) Der Einsatz von keramischen Sattelkörpern in der untersten bzw. obersten Lage eines Regeneratorbettes hat aufgrund des hohen Druckverlustes (turbulente Strömung durch die Sattelkörper) und deren offenen Struktur zur Folge, dass sich der Luftstrom innerhalb dieser Lage horizontal gut verteilt. Nachteile dieser Sattelkörperlagen ist die hohe Verstopfungsgefahr, der niedere thermische Rückgewinnungsgrad der Sattelkörper und das teilweise Verlegen der anschließenden liegenden Wabenkörperkanäle. Des Weiteren kann sich die Schüttungsdichte der Sattelkörper während des Betriebes der Anlage durch thermische und mechanische Einflüsse verändern und die Position der darüber gestapelten Wabenkörperelemente nachteilig verändern.

Ad B) Wabenkörper mit diagonalen Kanälen (Sulzerplatten) werden unter der Produktbezeichnung "Flex Ceramics" angeboten und haben im Vergleich zu Wabenkörpern mit Längskanälen eine wesentlich geringere Wärmeaustauschfläche und deshalb geringere thermische Effizienz. Die angestrebte Querverströmung wird nur durch eine relativ hohe Bauhöhe dieser Lage erzielt und geht auf Kosten der Gesamteffizienz der Anlage.

Ad C) Perforierte Bleche unterhalb des Regeneratorbettes können bei Neuanlagen entsprechend eingeplant werden, sind jedoch in bestehenden Anlagen nur mit sehr hohem Aufwand nachzurüsten. Nachteil dieser Lochbleche ist, dass sie nur im Kaltbereich der Anlage eingesetzt werden können und korrosionsstabile Materialien relativ teuer sind.

Die Aufgabe der Erfindung besteht darin, die geschilderten Mängel der Wabenkörperstrukturen nach dem Stand der Technik zu vermeiden und eine möglichst gute Querverströmung innerhalb eines keramischen Wabenkörpers bzw. einer Lage von Wabenkörpern zu erreichen. Diese Aufgabe wird erfindungsgemäß dadurch gelöst, dass die Ausnehmung einen rohrförmigen Querschnitt aufweist, welcher derart bemessen ist, dass die Anzahl der Strömungskanäle aus der Ebene des prismatischen Körpers, die quer zu der Seite liegt, an welcher die Ausnehmung mündet, und welche durch die Ausnehmung miteinander verbunden sind, größer ist als die Anzahl der Strömungskanäle dieser Ebene, die durch die Ausnehmung nicht miteinander verbunden sind. Dadurch werden innerhalb des Wabenkörpers Zonen geschaffen werden, in denen sich der Luftstrom quer zur vorgegebenen Strömungsrichtung des Luftstromes verteilen kann.

Bei der Stapelung der Wabenkörper entsteht so eine netzwerkartige offene Röhrenstruktur, die eine signifikante Querverströmung innerhalb einer Wabenkörperlage ermöglicht.

Vorzugsweise sind zwei einander kreuzende rohrförmige Ausnehmungen vorgesehen, die sich jeweils zwischen zwei einander gegenüberliegenden Seitenflächen des prismatischen Wabenkörpers erstrecken.

Nach einem anderen Merkmal der Erfindung werden die rohrförmigen Ausnehmungen durch ein spanabhebendes Verfahren in dem ungebrannten Wabenkörper ausgebildet.

Erfindungsgemäß können außerdem Einbauten in den rohrförmigen Ausnehmungen, welche einerseits die Querverströmung bzw. Verwirbelung des Luftstromes weiter fördern, vorgesehen werden, z.B. statische Mischerstrukturen.

Wesentliche Vorteile der Erfindung gegenüber den bekannten Wärmespeicherkörpern sind
- eine kompakte Bauweise und mechanische Stabilität,
- die Möglichkeit, diese Technologie auf alle Zellgeometrien und entsprechenden Anwendungen anzuwenden,
- einen hohen Grad an Querverströmung im Verhältnis zu zurückgelegter Strecke in Strömungsrichtung zu erreichen,
- einen hohen Wärmerückgewinnungsgrad der verbleibenden Wabenstruktur sicherzustellen,
- die Verstopfungsgefahr gegenüber den Standardwabenstrukturen nicht zu erhöhen, und
- eine Anwendung auch in den Heißzonen des Regeneratorbettes zu ermöglichen.

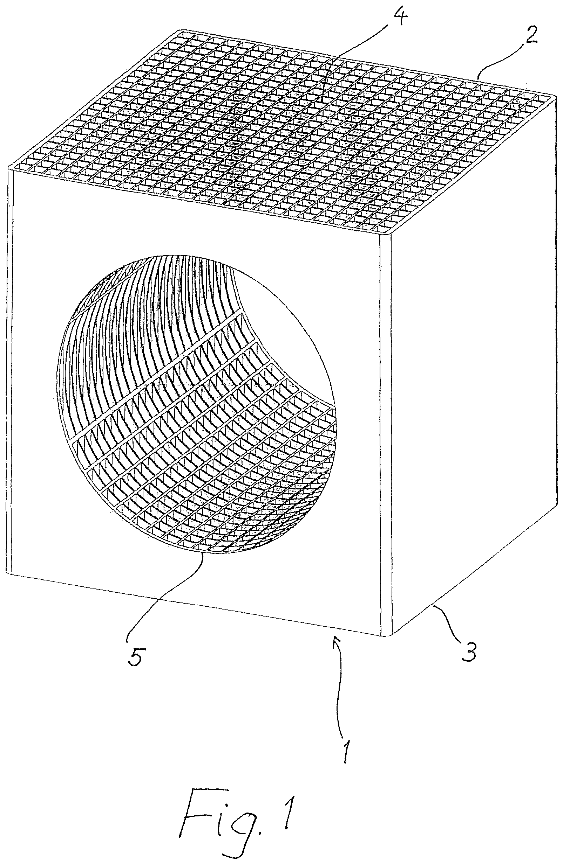

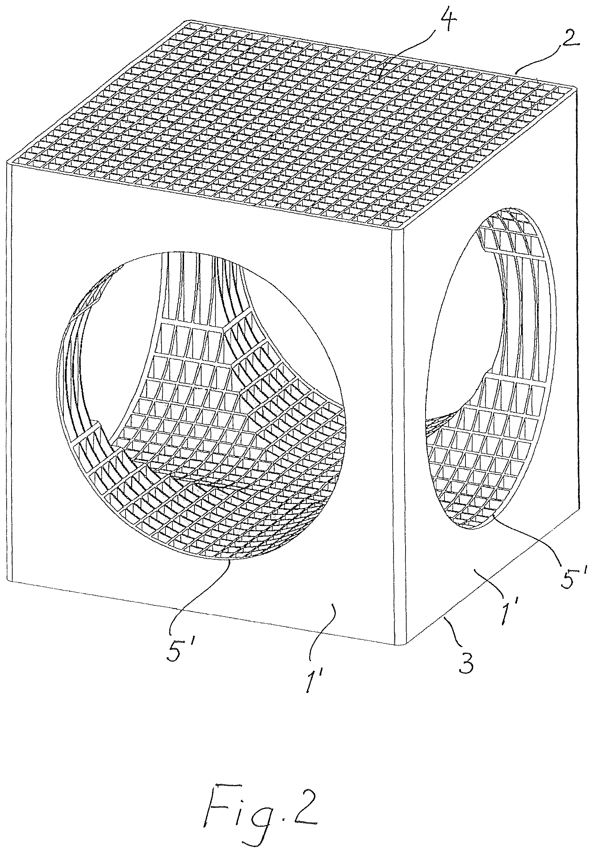

Die Erfindung wird nachfolgend an Ausführungsbeispielen unter Bezugnahme auf die Zeichnungen näher erläutert. Es zeigen: Fig. 1 eine erste Ausführungsform eines Wabenkörpers gemäß der Erfindung in einer Perspektivansicht, und Fig. 2 eine zweite Ausführungsform eines erfindungsgemäßen Wabenkörpers.

Die in den Fig. 1 und 2 dargestellten keramischen Wabenkörper 1 haben die Gestalt eines rechteckigen Prismas mit zueinander parallelen Stirnflächen 2, 3. Die Wabenkörper 1 sind von zueinander parallelen, geradlinigen Kanälen 4 mit rechteckigem Querschnitt durchzogen, die sich zwischen den Stirnflächen erstrecken und durch dünnwandige Stege voneinander getrennt sind. Die Kanäle 4 könnten auch quadratischen Querschnitt haben. Für den praktischen Einsatz können die Wabenkörper 1 beispielsweise eine Prismenlänge von etwa 0,1 - 1,0 m, insbesondere von etwa 0,15 - 0,3 m und eine Prismenstirnflächen-Seitenlänge von etwa 0,1 - 0,5 m, vorzugsweise von 0,1 - 0,30 m aufweisen.

Die in den Fig. 1 und 2 gezeigten Wabenkörper 1 werden zweckmäßig durch Strangpressen (vor dem Brennen) beispielsweise als 43 x 43 Zellen-Wabenkörper 1 mit einer Geometrie von 150 x 150 x 150 mm³ und mit Strömungskanälen 4 von 2,9 x 2, 9 mm bzw. einer Zellwandstärke von 0,5 mm hergestellt.

Wie die Fig. 1 und 2 außerdem zeigen, sind die Wabenkörper 1 mit rohrförmigen Ausnehmungen 5, 5' versehen. Die Ausnehmungen 5, 5' werden nach dem Strangpressen durch spanabhebende Verfahren an den "grünen" (ungebrannten) Wabenkörpern 1 erhalten, vorzugsweise durch Bohren mittels einem Kernbohrer entsprechenden Durchmessers.

Das Bohren der Ausnehmung 5 gemäß Fig. 1 erfolgt über einen einseitigen Bohrvorgang durch den gesamten Querschnitt des Wabenkörpers 1. Alternativ werden gemäß Fig. 2 zwei Bohrvorgänge vorgenommen, z.B. jeweils bis zur Mitte des Wabenkörpers 1. Zur Erzielung der kreuzweise angeordneten rohrförmigen Ausnehmungen 5' gemäß Fig. 2, die sich jeweils zwischen zwei einander gegenüberliegenden Seitenflächen 1' erstrecken, wird der Wabenkörper 1 zweimal (bei der Durchbohrvariante jeweils um 90° versetzt) bzw. viermal (jeweils um 90° versetzt/beim Bohrvorgang bis zur Mitte des Wabenkörpers) bearbeitet.

Die erfindungsgemäßen Wabenkörper 1 werden im praktischen Einsatz aneinandergereiht und übereinander gestapelt. Dabei können beispielsweise zwei übereinander gestapelte Wabenkörper 1 jeweils um 90° zueinander verdreht im Stapel angeordnet werden. Bei Aneinanderreihung bzw. Stapelung von Wabenkörpern 1, die zwei einander kreuzende rohrförmige Ausnehmungen 5' aufweisen, ergibt sich in jeder Lage ein netzwerkartiges offenes Rohrsystem mit außerordentlich günstiger Querverströmung. Es kann bzw. können in einem Stapel aber auch nur die unterste oder die beiden untersten Wabenkörperlage(n) mit rohrförmigen Ausnehmungen 5, 5' in den Wabenkörpern 1 versehen sein und die darüber liegenden Lagen aus Standard-Wabenkörpern 1 ohne rohrförmige Ausnehmungen 5, 5' bestehen.

## Patentansprüche

1. Wabenkörper aus Keramikmaterial zur Verwendung in Anlagen für die Reinigung und/oder Regenerierung von Gasen, mit einem prismatischen Körper, der von einer Vielzahl zueinander paralleler, geradliniger Gasströmungskanälen durchzogen ist, die in beiden Stirnseiten des Wabenkörpers ausmünden, wobei der Wabenkörper (1) zumindest eine Ausnehmung (5, 5') aufweist, die quer zur Richtung der Strömungskanäle (4) orientiert ist, **dadurch gekennzeichnet, dass** die Ausnehmung (5, 5') einen rohrförmigen Querschnitt aufweist, welcher derart bemessen ist, dass die Anzahl der Strömungskanäle (4) aus der Ebene des prismatischen Körpers, die quer zu der Seite liegt, an welcher die Ausnehmung (5, 5') mündet, und welche durch die Ausnehmung (5, 5') miteinander verbunden sind, größer ist als die Anzahl der Strömungskanäle (4) dieser Ebene, die durch die Ausnehmung (5, 5') nicht miteinander verbunden sind.

2. Wabenkörper nach Anspruch 1, **dadurch gekennzeichnet, dass** zwei einander kreuzende rohrförmige Ausnehmungen (5') vorgesehen sind, die sich jeweils zwischen zwei einander gegenüberliegenden Seitenflächen (1') des prismatischen Wabenkörpers (1) erstrecken.

3. Wabenkörper nach Anspruch 1 oder 2, **dadurch gekennzeichnet, dass** die rohrförmigen Ausnehmungen (5, 5') durch ein spanabhebendes Verfahren in dem ungebrannten Wabenkörper (1) ausgebildet werden.

4. Wabenkörper nach einem der Ansprüche 1 bis 3, **dadurch gekennzeichnet, dass** in den rohrförmigen Ausnehmungen (5, 5') Einbauten vorgesehen sind, welche die Querströmung bzw. Verwirbelung des Luftstromes fördern, insbesondere statische Mischerstrukturen.

## Claims

1. Honeycomb body made of ceramic material for use in installations for purifying and/or regenerating gases, having a prismatic body through which pass a multiplicity of mutually parallel, straight gas flow channels that are open on both end sides of the honeycomb body, wherein the honeycomb body (1) has at least one cutout (5, 5') which is oriented transversely to the direction of the flow channels (4), **characterized in that** the cutout (5, 5') has a tubular cross section dimensioned such that the number of flow channels (4) from the plane of the prismatic body that is transverse to the side on which the cutout (5, 5') opens, and that are connected to one another by the cutout (5, 5'), is greater than the number of flow channels (4) of this plane which are not connected to one another by the cutout (5, 5').

2. Honeycomb body according to Claim 1, **characterized in that** there are provided two intersecting tubular cutouts (5'), which each extend between two mutually opposite side faces (1') of the prismatic honeycomb body (1).

3. Honeycomb body according to Claim 1 or 2, **characterized in that** the tubular cutouts (5, 5') are formed in the green honeycomb body (1) by means of a chip-removing method.

4. Honeycomb body according to one of Claims 1 to 3, **characterized in that** inserts which promote transverse flow or swirling of the air flow, in particular static mixer structures, are provided in the tubular cutouts (5, 5').

## Revendications

1. Corps alvéolaire en matériau céramique conçu pour l'utilisation dans des installations dévolues à l'épuration et/ou à la régénération de gaz, comportant un corps prismatique parcouru par une multiplicité de canaux rectilignes de circulation gazeuse parallèles les uns aux autres, qui débouchent dans les deux faces extrêmes dudit corps alvéolaire, ledit corps alvéolaire (1) étant muni d'au moins un évidement (5, 5') orienté transversalement par rapport à la direction desdits canaux de circulation (4), **caractérisé par le fait que** l'évidement (5, 5') présente une section transversale tubulaire dimensionnée de façon telle que le nombre des canaux de circulation (4) qui sont situés hors du plan du corps prismatique, transversal par rapport à la face au niveau de laquelle ledit évidement (5, 5') débouche, et qui sont reliés mutuellement par l'intermédiaire dudit évidement (5, 5'), soit supérieur au nombre des canaux de circulation (4) de ce plan qui ne sont pas reliés mutuellement par l'intermédiaire dudit évidement (5, 5').

2. Corps alvéolaire selon la revendication 1, **caractérisé par** la présence de deux évidements tubulaires (5') s'entrecroisant et s'étendant, à chaque fois, entre deux surfaces latérales opposées (1') dudit corps alvéolaire prismatique (1).

3. Corps alvéolaire selon la revendication 1 ou 2, **caractérisé par le fait que** les évidements tubulaires (5, 5') sont pratiqués par un procédé d'enlèvement de copeaux dans ledit corps alvéolaire (1) non cuit.

4. Corps alvéolaire selon l'une des revendications 1 à 3, **caractérisé par le fait que** des parties intégrées, notamment des structures mélangeuses statiques prévues dans les évidements tubulaires (5, 5'), favorisent respectivement l'écoulement transversal ou le tourbillonnement du courant d'air.
